(19) Europäisches Patentamt
European Patent Office
Office européen des brevets

(11) Publication number : **0 443 733 B1**

(12) # EUROPEAN PATENT SPECIFICATION

(45) Date of publication of patent specification : **21.07.93 Bulletin 93/29**

(51) Int. Cl.$^5$ : **A01N 43/90**

(21) Application number : **91300741.5**

(22) Date of filing : **30.01.91**

(54) **Method for the treatment of fleas.**

(30) Priority : **08.02.90 US 476912**
**31.10.90 US 607381**

(43) Date of publication of application : **28.08.91 Bulletin 91/35**

(45) Publication of the grant of the patent : **21.07.93 Bulletin 93/29**

(84) Designated Contracting States : **CH DE FR GB IT LI NL**

(56) References cited :
**EP-A- 0 180 539**
**EP-A- 0 203 832**
**EP-A- 0 284 255**
**EP-A- 0 352 529**
**US-A- 3 968 207**
**Journal of Medicinal Chemistry, vol.32, no.2, February 1989, pages 375-381, American Chemical Society, Washington, US; H.Mrozik et al.:"Syntheses and biological activities of 13-substituted avermectin aglyons."**

(56) References cited :
**Chemical Patents Index, Documentation Abstracts Journal, Section - Agrochemicals, 7th June 1989, acc.-no.89-110639/15, Derwent Publications Ltd., London, GB; & JP-A-1 056 681 (Sankyo K.K.) 03.03.1989.**
**Experientia, vol.37, 1981, pages 963-964, Birkhäuser Verlag, Basel, CH; J.Putter et al.:"Avermectins: novel insecticides, acaricides and nematicides from a soil microorganism."**

(73) Proprietor : **MERCK & CO. INC.**
**126, East Lincoln Avenue P.O. Box 2000**
**Rahway New Jersey 07065-0900 (US)**

(72) Inventor : **Mrozik, Helmut**
**159 Idlebrook Lane**
**Matawan, NJ 07747 (US)**
Inventor : **Seward, Randolph Lee**
**P.O. Box 948**
**Plainfield, NJ 07061 (US)**

(74) Representative : **Thompson, John Dr. et al**
**Merck & Co., Inc. European Patent**
**Department Terlings Park Eastwick Road**
**Harlow, Essex CM20 2QR (GB)**

EP 0 443 733 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The compound 13-deoxy-22,23-dihydro 13β-fluoro avermectin Bla/Blb is a known compound. See Mrozik et al in Journal of Medicinal Chemistry 32 pg 375-381 (1989). Additional compounds are disclosed in European Patent Publication 180539 and in Japanese Patent Publication 56681-1989. The compounds are disclosed as antiparasitic agents. The treatment of fleas on warm blooded animals, in particular companion animals which have close residency with man and premise areas where fleas are found, has historically been a very difficult matter. Current treatments are generally deficient in the ability to quickly kill the fleas; the lack of a prolonged duration of activity; and a toxic or irritant effect upon the host or upon the owner of the companion animal. The products of this invention have a rapid onset of activity against the current population of fleas, a prolonged duration of activity, and a high level of safety.

### SUMMARY OF THE INVENTION

The compounds of this invention with significant activity against fleas have the following structure:

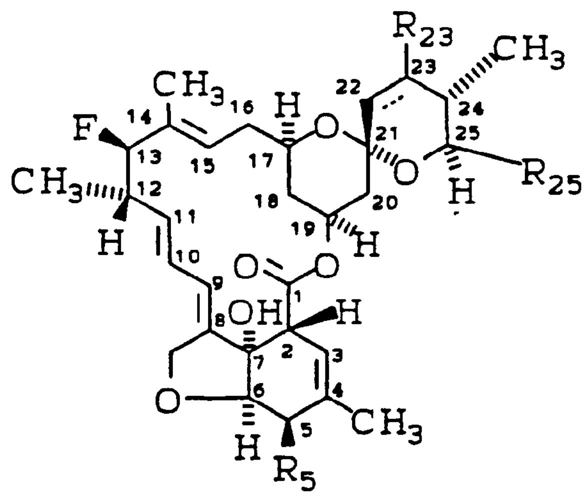

wherein the broken line at carbons 22 and 23 indicate a single or a double bond at the 22,23-position;

$R_5$ is hydroxy, loweralkoxy of 1 to 5 carbon atoms or loweralkanoyloxy of 1 to 5 carbon atoms;

$R_{23}$ is present only when the broken line indicates a 22,23-single bond and is hydrogen, hydroxy, oxo or loweralkanoyloxy of from 1 to 5 carbon atoms; and

$R_{25}$ is branched loweralkyl of from 3 to 8 carbon atoms or branched loweralkenyl of from 3 to 8 carbon atoms.

The preferred compound of this invention is defined when the broken line indicates a single bond at the 22,23-position, $R_5$ is hydroxy, $R_{23}$ is hydrogen and $R_{25}$ is isopropyl or sec-butyl.

The instant invention is concerned with the use of other 13-deoxy-22,23-dihydro-13β-fluoro avermectin Bla/Blb or substituted 13β-fluoro avermectin compounds in the treatment of parasitic fleas of warm blooded animals. Thus, it is an object of this invention to describe the above-named compound. It is a further object to describe the use of such a compound in the treatment of flea infestations. A still further object is to describe the superior safety and efficiency of said compound. Further objects will become apparent from a reading of the following descriptions.

### DESCRIPTION OF THE INVENTION

The preferred compound of this invention, 13-deoxy-22,23-dihydro-13β-fluoro avermectin Bla/Blb, is a member of the well-known avermectin series of compounds which are active endo- and ecto antiparasitic agents. The structure of the above compound is fully described in the above reference to Mrozik et al. along with the procedures for the preparation of such compound. The 13β-fluoro compounds of this invention are generally prepared as a mixture of compounds as evidenced by the use of the Bla/Blb nomenclature. The "a" isomer has a sec-butyl group at the 25-position and the "b" isomer has an isopropyl group at the 25-position. Since the "a" and "b" compounds are closely related structurally and have very similar biological properties,

it has generally not been found necessary to separate the "a" and "b" isomers but rather to use the compound as a mixture thereof. Generally the compounds are isolated and used as a mixture of approximately 80% of the "a" isomer and 20% of the "b" isomer.

It has been unexpectedly found that the 13β-fluoro compounds have a very high level of activity against flea infestations of warm blooded animals, in particular companion animals such as dogs and cats, and against fleas infestations of indoor and outdoor premises. In addition, the compounds have been found to have a very rapid onset of activity, an extended duration of activity and a high level of safety when compared to closely related compounds.

The activity of the 13β-fluoro compounds is observed in a dog flea test in which 100 unfed adult fleas are placed on each dog on days -1, 2, 6, 13, 20 and 27. The test compound, in the from of an aqueous solution or suspension, is applied at a constant dosage rate of 200 ppm as a sponge-on, whole body dip at day 0. The test compound is applied only once. The surviving fleas are counted by hand, comb or hair part at the observation times indicated. The efficacy of the compound is rated as a percentage of the reduction of live fleas compared to the control animals (animals tested only with an unmedicated aqueous dip). The test was carried out with the following compounds and the results are listed in Table 1.

Compound 1 - 13-deoxy-22,23-dihydro 13β-fluoro avermectin Bla/Blb aglycone
Compound 2 - 13-deoxy-22,23-dihydro 13α-fluoro avermectin Bla/Blb aglycone
Compound 3 - 13-deoxy-22,23-dihydro 13β-chloro avermectin Bla/Blb aglycone
Compound 4 - 22,23-dihydro avermectin Bla/Blb (ivermectin)

Table 1

Activity of Selected Avermectins Against

Repeated Challenges with Fleas on Dogs

| Treatment (@ 200 ppm) | Number of Dogs | Percent Control at Times After Treatment (compared to vehicle-treated controls) | | | | | | | |
|---|---|---|---|---|---|---|---|---|---|
| | | 2hr | 8hr | 1d | 3d | 7d | 14d | 21d | 28d |
| Compound 1 | 4 | 73 | 86 | 98 | 99 | 100 | 100 | 92 | ND |
| Compound 1 | 4 | ND | 92 | 100 | 100 | 100 | 99 | 98 | 91 |
| Compound 1 | 2 | ND | 92 | 100 | 100 | 100 | 100 | 92 | 79 |
| Compound 2 | 2 | ND | 81 | 100 | 98 | 93 | 83 | 77 | 55 |
| Compound 2 | 4 | 42 | 13 | 55 | 71 | 95 | 74 | 71 | ND |
| Compound 3 | 2 | ND | 42 | 100 | 99 | 95 | 73 | 48 | 25 |
| Compound 4 | 2 | 13 | 0 | 57 | 71 | 97 | 89 | 57 | ND |

hr = hours following treatment
d = days following treatment
ND = not done

From the foregoing data it is apparent that of the avermectin compounds tested, no compound matches the combination of rapid onset of activity and prolonged duration of activity of the 13β-fluoro compound. This combination of rapid onset of activity and duration of activity of up to four weeks, is not found in any flea control product available at this time, and makes the 13β-fluoro compound a unique product.

The 13β-fluoro compounds are generally applied topically in order to provide for the most rapid knockdown. The compounds may be administered orally, since it is active systemically, however, since oral administration is only effective after the compound enters the host's bloodstream and after the flea takes a blood meal, topical administration is preferred. Topically on the animal or premise the 13β-fluoro compound can be administered at dosages of from 50 to 1000 ppm preferally at from 100 to 300 ppm an most preferably at about 200 ppm. The 13β-fluoro compound can be administered in the form of a liquid dip, shampoo, mousse, foam,

spray or in a solid form as a pour-on or spray-on powder. In addition, the 13β-fluoro compound can be placed in sustained release systems such as microencapsulation, microbeads, microsponges, lipesomes, collars and tags for long-term control of fleas and other external parasites.

While less preferred, the 13β-fluoro compound can be administered orally as the sole treatment, or in combination with the topical application of the compound. The active compound can be administered as a tablet, capsule, paste, drench, syrup or other typical oral formulations at dosages of from 100 to 1000 μg/kg, preferably at from 400 to 600 μg/kg.

## Claims

1. A method for the treatment of infestations of fleas on warm-blooded animals and premise areas where fleas reside which comprises administering to such animals or area an effective amount of a compound having the formula:

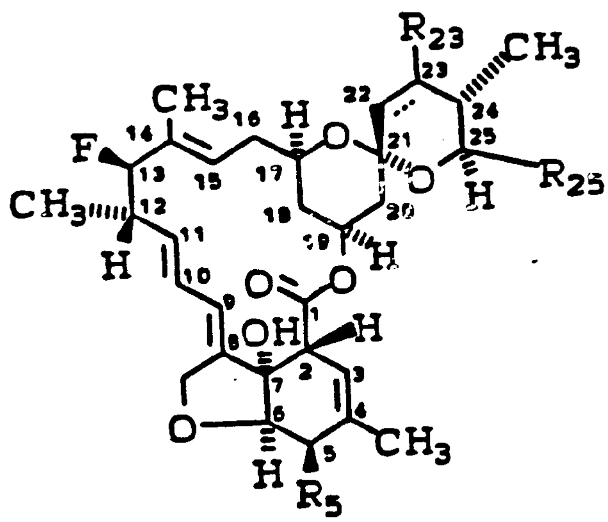

wherein the broken line at carbons 22 and 23 indicate a single or a double bond at the 22,23-position;

$R_5$ is hydroxy, loweralkoxy of 1 to 5 carbon atoms or loweralkanoyloxy of 1 to 5 carbon atoms;

$R_{23}$ is present only when the broken line indicates a 22,23-single bond and is hydrogen, hydroxy, oxo or loweralkanoyloxy of from 1 to 5 carbon atoms; and

$R_{25}$ is branched lower alkyl of from 3 to 8 carbon atoms or branched loweralkenyl of from 3 to 8 carbon atoms.

2. The method of Claim 1 wherein the broken line indicates a single bond at the 22,23-position, $R_5$ is hydroxy, $R_{23}$ is hydrogen and $R_{25}$ is isopropyl or sec-butyl and the compound is 13-deoxy-22,23-dihydro-13β-fluoro avermectin Bla/Blb aglycone.

3. The method of Claim 1 wherein the compound is administered orally or topically or a combination of orally and topically.

4. The method of Claim 3 where the compound is administered topically.

5. The method of Claim 4 where the topical administration is carried out with the compound in a liquid or powdered formulation.

6. The method of Claim 4 where the compound is administered at from 50 to 1000 ppm.

7. The method of Claim 6 where the compound is administered at from 100 to 300 ppm.

8. The method of Claim 3 where the compound is administered orally.

9. The method of Claim 8 where the compound is administered orally at from 100 to 1000 µg/kg.

10. The method of Claim 1 wherein the host animal is a dog or cat.

**Patentansprüche**

1. Verfahren zur Behandlung von Infektionen mit Flöhen bei Warmblütern und in Bereichen im Haus, in denen Flöhe leben, umfassend die Verabreichung bzw. das Aufbringen einer wirksamen Menge einer Verbindung der Formel

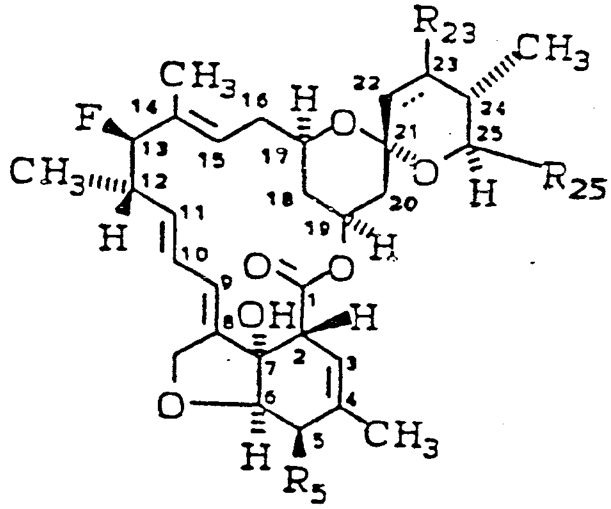

wobei die unterbrochene Linie zwischen den Kohlenstoffatom 22 und 23 eine Einfach- oder eine Doppelbindung in 22-23-Stellung angibt;
$R_5$ Hydroxy, niederes Alkoxy mit 1 bis 5 Kohlenstoffatomen oder niederes Alkanoyloxy mit 1 bis 5 Kohlenstoffatomen bedeutet, niederes Alkanoyloxy mit 1 bis 5 Kohlenstoffatomen bedeutet und $R_{25}$ verzweigtes niederes Alkyl mit 3 bis 8 Kohlenstoffatomen oder verzweigtes niederes Alkenyl mit 3 bis 8 Kohlenstoffatomen bedeutet,
an bzw. auf solche Tiere oder Bereiche.

2. Verfahren nach Anspruch 1, wobei die unterbrochene Linie eine Einfachbindung in 22-23Stellung anzeigt, $R_5$ Hydroxy, $R_{23}$ Wasserstoff und $R_{25}$ Isopropyl oder sek.-Butyl ist und die Verbindung 13-Deoxy-22,23-dihydro-13β-fluor-avermectin-Bla/Blb-aglycon ist.

3. Verfahren nach Anspruch 1, wobei die Verbindung oral oder topisch oder in einer Kombination von oral und topisch verabreicht wird.

4. Verfahren nach Anspruch 1, wobei die Verbindung topisch verabreicht wird.

5. Verfahren nach Anspruch 4, wobei die topische Verabreichung mit der Verbindung in flüssiger oder pulverisierter Form durchgeführt wird.

6. Verfahren nach Anspruch 4, wobei die Verbindung in einer Menge von 50 bis 1 000 ppm verabreicht wird.

7. Verfahren nach Anspruch 6, wobei die Verbindung in einer Menge von 100 bis 300 ppm verabreicht wird.

8. Verfahren nach Anspruch 3 wobei die Verbindung oral verabreicht wird.

9. Verfahren nach Anspruch 8, wobei die Verbindung oral in einer Menge von 100 bis 1 000 µg/kg verabreicht wird.

10. Verfahren nach Anspruch 1, wobei das Wirtstier ein Hund oder eine Katze ist.

## Revendications

1. Procédé pour le traitement des infestations par les puces des animaux à sang chaud et des lieux où des puces résident, qui comprend l'administration à ces animaux ou à ces lieux d'une quantité efficace d'un composé répondant à la formule :

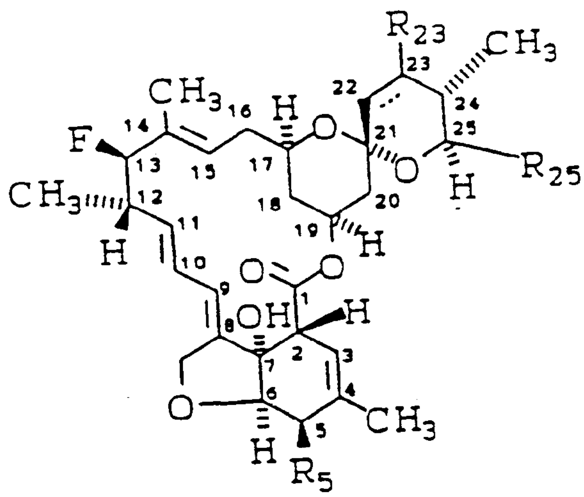

dans laquelle le pointillé réunissant les atomes de carbone 22 et 23 indique une simple liaison ou une double liaison dans la position 22,23 ;

$R_5$ est un hydroxy, un alcoxy inférieur de 1 à 5 atomes de carbone ou un alcanoyloxy inférieur de 1 à 5 atomes de carbone ;

$R_{23}$ n'est présent que lorsque le pointillé indique une simple liaison 22,23 et est un hydrogène, un hydroxy, un oxo ou un alcanoyloxy inférieur de 1 à 5 atomes de carbone ; et

$R_{25}$ est un alkyle inférieur ramifié de 3 à 8 atomes de carbone ou un alcényle inférieur ramifié de 3 à 8 atomes de carbone.

2. Procédé selon la revendication 1, dans lequel le pointillé indique une simple liaison dans la position 22,23, $R_5$ est un hydroxy, $R_{23}$ est un hydrogène et $R_{25}$ est un isopropyle ou un sec-butyle et le composé est l'aglycone de la 13-désoxy-22,23-dihydro-13β-fluoro-avermectine Bla/Blb.

3. Procédé selon la revendication 1, dans lequel le composé est administré par voie orale ou locale ou par combinaison de la voie orale et de la voie locale.

4. Procédé selon la revendication 3, dans lequel le composé est administré par voie locale.

5. Procédé selon la revendication 4, dans lequel l'administration locale est effectuée avec le composé en une formulation liquide ou en poudre.

6. Procédé selon la revendication 4, caractérisé en ce que le composé est administré entre 50 et 1 000 ppm.

7. Procédé selon la revendication 6, caractérisé en ce que le composé est administré entre 100 et 300 ppm.

8. Procédé selon la revendication 3, dans lequel le composé est administré par voie orale.

9. Procédé selon la revendication 8, dans lequel le composé est administré par voie orale entre 100 et 1 000 µg/kg.

10. Procédé selon la revendication 1, dans lequel l'animal hôte est un chien ou un chat.